# FASCICULE DE BREVET EUROPEEN

(11) **EP 1 228 642 B1**
(45) Date de publication et mention de la délivrance du brevet: **12.10.2005**
(21) Numéro de dépôt: 00969758.2
(22) Date de dépôt: 02.11.2000
(51) Int. Cl.: H04N 7/16

(54) **Traitement cryptographique centralisé à haut débit cryptographique**
Zentralisierte kryptographische Datenverarbeitung mit hohem Durchsatz
Centralised cryptographic data processing with high cryptographic rate

(30) Priorité: 08.11.1999 CH 204599
(43) Date de publication de la demande: 07.08.2002
(73) Titulaire: Nagravision SA, 1033 Cheseaux-sur-Lausanne (CH)
(72) Inventeur: GROSCLAUDE, Nicolas, CH-1066 Epalinges (CH); GUHL, David, CH-1028 Préverenges (CH)
(74) Mandataire: Wenger, Joel-Théophile
(86) Numéro de dépôt international: PCT/IB2000/001589
(87) Numéro de publication internationale: WO 2001/035659

(56) Documents cités:
- WO-A-96/07267
- EBO PROJECT GROUP B/CA: "FUNCTIONAL MODEL OF A CONDITIONAL ACCESS SYSTEM" EBU REVIEW- TECHNICAL,BE,EUROPEAN BROADCASTING UNION. BRUSSELS, no. 266, décembre 1995 (1995-12), page 64-77 XP000559450 Grand-Saconnex, CH ISSN: 0251-0936 cité dans la demande

## Description

La présente invention concerne un procédé et système cryptographique centralisé, en particulier destiné aux applications nécessitant de hauts débits cryptographiques.

Dans un système de service distribué tel que la télévision à péage, le paiement par carte bancaire ou par le biais de l'Internet, les informations échangées entre un centre de gestion et les modules utilisateur, utilisent des moyens cryptographiques pour garantir l'authenticité et la confidentialité des données.

Selon le type d'application, le nombre de modules utilisateur peut être élevé et chacun de ces modules achemine les informations, par l'intermédiaire de concentrateurs, à un ou des centres de gestion en charge d'authentifier et d'effectuer les transactions. Ces opérations sont basées sur des communications encryptées et nécessitent des moyens cryptographique, d'une part du côté des modules utilisateur, et d'autre part du côté du centre de gestion. On imagine aisément que si l'on veut traiter un grand nombre de modules utilisateur, les moyens cryptographique du côté central doivent être très puissants alors que les moyens cryptographiques du côté utilisateur, étant propre à chaque utilisateur, n'ont pas les mêmes besoins.

C'est pourquoi, si un processeur contenu dans une carte à puce est capable de traiter ces informations au niveau du module utilisateur, on installe par contre généralement des ordinateurs puissants du côté du centre de gestion.

Un point capital est l'accès aux clés de cryptage. Dans le centre de gestion, les opérations cryptographiques sont effectuées dans un module cryptographique spécialisé, pour lequel une attention particulière est portée à l'aspect sécurité. Ils sont composés entres autres, d'un processeur à haute capacité, dédicacé aux opérations cryptographiques, et une mémoire contenant les clés. Pour des raisons de sécurité, ces modules sont, soit situés dans une enceinte protégée telle qu'un coffre ou local fermé, soit encapsulés dans un boîtier dont l'ouverture par n'importe quelle méthode provoque l'effacement des informations sensibles.

Bien que ces dispositions présentent d'indéniables qualités, ces modules souffrent de faiblesse de par leur structure électronique et peuvent être vulnérables à un opérateur mal intentionné. En effet, l'employé détenteur de la clé permettant d'ouvrir le local où se situe les modules cryptographique peut facilement accéder à la mémoire où sont stockées les clés cryptographiques. Une telle atteinte peut se révéler catastrophique pour la sécurité du système et la crédibilité du pourvoyeur de service.

De plus ces modules cryptographiques, bien que de capacité de traitement élevée, ne présentent pas de souplesse lorsque des capacités supérieures sont nécessaires. Un accroissement de puissance de 10% par exemple implique le doublement du module cryptographique, ce qui revient en fait à accroître la capacité de 100%. Un autre aspect concerne la mise à jour de ces modules qui reste difficile pour une carte spécialement développée à cet effet.

Il est connu d'utiliser plus d'une carte à puce pour les opérations de décryptage dans le module d'abonné et cette configuration est décrite dans le document WO 96/07267 ainsi que la publication EBU Review Technical No 266 "Functional Model of a Conditional Access System". Néanmoins, la présence de ces cartes multiples placées du côté du récepteur est dictée par le fait qu'il faille décrypter plusieurs sources utilisant des clés différentes, voire des fonctions cryptographiques différentes. La présence de ces cartes ne permet pas de résoudre le problème du traitement d'un flux important de données mais uniquement d'assurer la comptabilité avec divers standard.

Le problème que se propose de résoudre la présente invention est de disposer d'un module cryptographique qui présente une haute sécurité vis-à-vis de l'intrusion tant au niveau physique que logiciel, une grande flexibilité en fonction des besoins en débit cryptographiques et qui permet une mise à jour aisée.

Ce but est pleinement atteint par le système cryptographique centralisé défini dans la revendication 1, comprenant un module de contrôle et au moins un module cryptographique, caractérisé en ce que chaque module cryptographique est composé d'un ou plusieurs modules interface sur lequel se trouve une ou plusieurs unités de sécurité monolithique.

On entend par unité de sécurité monolithique une unité incluant tous les éléments nécessaires aux opérations cryptographiques et réunis sur un support unique afin d'en assurer la sécurité. Ils sont généralement composés d'une seule puce électronique, puce qui dispose d'une protection anti-intrusion mécanique ou électronique. D'autres structures composées de, par exemple, deux puces électroniques sont également assimilées à l'appellation "monolithique" pour autant qu'elles soient intimement liées et fournies par les distributeurs comme un seul élément.

Selon l'invention, le module cryptographique comprend un premier module de contrôle en charge de gérer les entrées/sorties d'informations à traiter. Il permet de déterminer le débit cryptographique souhaitable et connaît le débit cryptographique à disposition. Ce module de contrôle peut être soit matériel ou soit logiciel. Pour effectuer le traitement des informations, il dispose d'un ou plusieurs modules interface sur lequel se trouve des unités de sécurité monolithique. Chacune de ces unités comprend une unité de calcul cryptographique, une mémoire contenant au moins une partie des clés de cryptage et des moyens pour communiquer avec le module interface. Les clés sont en clair uniquement dans les unités de sécurité qui sont, comme indiqué précédemment, d'un haut niveau de sécurité. Ce niveau est atteint par le fait qu'elles sont composées d'un seul circuit dédicacé et homologué à cet effet. Leurs structures ne leur permettent pas d'atteindre des capacités de traitement élevées et c'est pourquoi l'accroissement du débit cryptographique est assuré par l'utilisation d'un grand nombre de ces unités. Plus le débit requis par le système cryptographique augmente, plus le nombre de ces unités en travail va augmenter.

Cette configuration permet d'assurer une grande souplesse quant aux débits cryptographiques de l'ensemble par l'adjonction d'unités de sécurité en fonction des besoins. Cette configuration permet de suivre la demande en ajoutant les unités de sécurités nécessaires.

Selon une forme de l'invention, les unités de sécurité monolithiques sont montées sur les modules interface de manière amovible. Cela permet une mise à jour facilitée de ces dernières, la technologie évoluant rapidement. Un autre avantage de cette solution est leur coût car ces unités de sécurité sont fabriquées en grande quantité, et de ce fait bénéficient d'un prix attractif.

Selon une forme de l'invention, les unités de sécurité sont des cartes à puce répondant aux normes ISO 7816.

Cette invention recouvre également la méthode de traitement cryptographique centralisée d'informations définie dans la revendication 8.

Selon cette méthode, le nombre d'unités de sécurité en service dépend du débit des informations demandé au module cryptographique. En effet, du fait que chaque unité n'a pas la performance suffisante pour traiter un grand nombre d'opérations cryptographiques dans un temps court, il est fait appel à plusieurs unités de sécurité. Le module de contrôle et le module d'interface autorisent la mise en parallèle des ressources des unités de sécurité.

Une des fonctions du module d'interface est la gestion des ressources disponible en aval. Le module d'interface effectue dans une phase d'initialisation, le recensement des unités de sécurités qui lui sont attachées ainsi que leurs caractéristiques. Ce fichier des ressources servira à aiguiller les requêtes selon les caractéristiques de ces unités.

Selon une variante de l'invention, on fait exécuter les mêmes opérations cryptographiques par plusieurs unités de sécurité et de comparer les différents résultats. Si les résultats diffèrent, le module de contrôle envoie un message d'erreur à la console. Cette dernière peut réagir de différentes manières, par exemple établir laquelle des unités de sécurité est responsable de l'erreur en utilisant, soit une unité de sécurité de référence, soit plusieurs unités de sécurité et détecte celle qui renvoie un résultat différent.

Le résultat de ce test sera notifié à la liste des ressources pour que le ou les unités défectueuses ne soient plus utilisée.

Dans l'hypothèse que l'erreur ne vienne non pas d'une unité de sécurité mais concerne toutes les unités d'un même module interface, les opérations cryptographiques parallèles sont exécutées par deux unités de sécurité situées dans deux modules interface différents. En effet, certains paramètres sont stockés sur le module interface et leur modification peut entraîner le disfonctionnement de toutes les unités de sécurité.

Afin de s'assurer du bon fonctionnement de ces différents modules, il est possible de faire exécuter des opérations de test sur des unités de sécurité non utilisées. Ces tests peuvent être effectués sur des données de référence dont le résultat est connus par avance, ou se dérouler en testant en parallèle plusieurs modules avec des données générées aléatoirement et en comparant les résultats.

L'invention sera mieux comprise grâce à la description détaillée qui va suivre et qui se réfère aux dessins annexés qui sont donnés à titre d'exemple nullement limitatif, dans lesquels :
- La figure 1 représente un système centralisé cryptographique selon l'état de la technique;
- La figure 2 représente un système cryptographique selon l'invention;

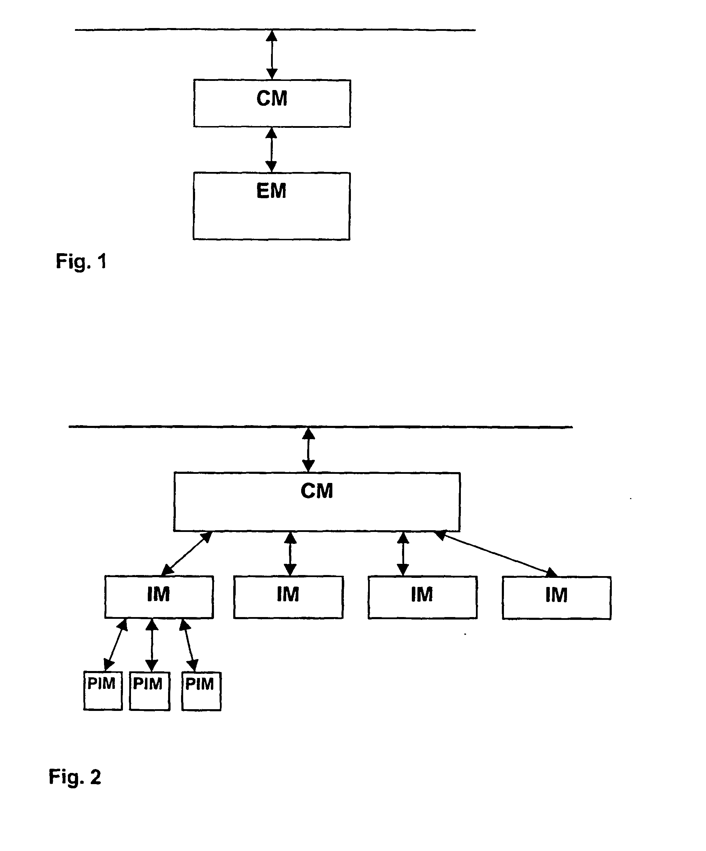

Sur la figure 1 sont représentés schématiquement les différents blocs de l'ensemble responsable de l'encryptage dans un centre de gestion. Sur le bus véhiculant les différentes informations nécessaires au fonctionnement du centre de gestion se trouvent les informations à encrypter. Lorsqu'une telle opération est demandée par le centre de gestion, il est fait appel au système cryptographique spécialisé représenté ici par le bloc module de contrôle CM et le bloc module cryptographique EM. Le module de contrôle CM a pour mission de filtrer les accès au module cryptographique EM, c'est-à-dire qu'il offre une protection pour les attaques menées de l'extérieur via le bus de communication. Il n'est pas conçu pour résister à une attaque locale, que se soit physique ou "informatique", par l'opérateur par exemple.

Ce module de contrôle CM, après avoir filtré les informations, les transmet au module cryptographique EM pour traitement. Comme indiqué plus haut, celui-ci comprend des moyens puissants pour exécuter dans un temps très court les opérations cryptographiques afin de satisfaire les débits élevés du bus central. Pour ce faire, il dispose des clés en clair dans sa mémoire. Pour notre exemple, ce module est situé dans une enceinte protégée physiquement afin d'éviter qu'un tiers puisse en extraire les clés ou modifier le logiciel à son profit.

Sur la figure 2 est représentée l'architecture du système selon l'invention. Nous retrouvons le module de contrôle CM qui fonctionne comme filtre logiciel pour les atteintes externes. Comme indiqué sur la figure 2, ce module est relié à plusieurs module interface IM. Ces modules possèdent une protection logicielle, c'est-à-dire qu'un certain nombre d'opérations (la lecture par exemple), sont tout simplement pas possibles. Ces modules ne sont par contre pas protégés physiquement, cette fonction étant laissée aux unités de sécurité PIM. Chaque module interface IM comprend un certain nombre de ces unités PIM afin d'accroître les débits cryptographiques.

Une autre tâche de ce module CM est de diriger les requêtes venant du bus central vers les unités de sécurité. Lorsque l'opération souhaitée est terminée (encryptage par exemple), le résultat est transmis au module CM qui informe l'entité qui a requis cette opération. Pour assurer la distribution des requêtes, le module CM dispose d'une liste des ressources disponibles. Lorsqu'une erreur a été détectée, l'unité responsable est désactivée dans la table des ressources.

Il n'est pas nécessaire que toutes les unités de sécurité soient du même type. Il se peut que certaines disposent d'unité de calcul cryptographique basée sur un algorithme différent des autres unités. Pour notre exemple, certaines unités disposent par exemple d'une unité de type RSA, d'autres d'une unité de type DES ou IDEA.

Ces informations sont contenues dans la liste des ressources stockée dans le module CM. Ce module aiguille les requêtes en fonction des disponibilités et en fonction des capacités des unités de sécurité.

Selon une variante de l'invention, les modules d'interface sont des cartes de type PCI et les unités de sécurité sont des cartes à puces de type ISO 7816.

Bien que la présente invention concerne en premier chef l'encryptage des données, l'architecture décrite plus haut est également applicable lors du décryptage d'un flux de données. En effet, il est possible que lors d'achat d'émission par exemple, les utilisateurs accèdent en nombre au centre de gestion et génèrent un flux important à décrypter. Les unités de sécurité sont donc sollicitées pour des opérations de décryptage de données.

## Revendications

1. Système cryptographique à haut débit centralisé placé dans un centre de gestion et destiné à traiter des données à transmettre à une pluralité de modules utilisateurs, comprenant un module de contrôle (CM) et au moins un module cryptographique (EM), **caractérisé en ce que** le module de contrôle comporte des moyens pour déterminer le débit cryptographique requis et pour connaître les ressources cryptographiques à disposition, et **en ce que** chaque module cryptographique est composé d'au moins un module interface (IM), sur lequel est connecté en parallèle, une pluralité d'unités de sécurité monolithiques (PIM), ces unités de sécurité faisant partie dudit système cryptographique.

2. Système selon la revendication 1, **caractérisé en ce que** l'unité de sécurité (PIM) comprend au moins une unité de calcul pour les fonctions cryptographiques, une mémoire contenant des clés cryptographiques, et des moyens de communication avec le module interface.

3. Système selon les revendications 1 ou 2, **caractérisé en ce que** l'unité de sécurité (PIM) est montée d'une manière amovible sur le module interface (IM).

4. Système selon les revendications 1 à 3, **caractérisé en ce que** l'unité de sécurité (PIM) se présente sous la forme d'une carte à puce.

5. Système selon la revendication 4, **caractérisé en ce que** cette carte à puce répond aux normes ISO 7816.

6. Système selon l'une des revendications précédentes, **caractérisé en ce que** les unités de sécurité monolithique (PIM) ont des unités de calcul cryptographique de type différent tels que RSA, DES, T-DES ou IDEA.

7. Système selon l'une des revendications précédentes, **caractérisé en ce que** le module de contrôle (CM) comprend une liste des ressources des unités monolithiques comprenant le nombre disponible, leur état, leur version et leur capacité cryptographique.

8. Méthode d'encryption/décryption centralisée d'informations transmises entre un centre de gestion et une pluralité de modules utilisateurs, consistant à transmettre par le centre de gestion des informations à encrypter ou décrypter à un module de contrôle (CM) disposé dans un module cryptographique (EM) dudit centre de gestion, ledit module de contrôle comprenant des moyens pour déterminer le débit cryptographique requis et pour connaître les ressources cryptographiques à disposition, ce module de contrôle comprenant en outre au moins un module interface (IM), et transmettant, par l'intermédiaire dudit module interface (IM), les informations à encrypter ou décrypter à une pluralité d'unités de sécurité monolithiques (PIM) connectées en parallèle sur ledit module interface, ces unités de sécurité étant chargées des opérations cryptographiques selon le débit des informations.

9. Méthode de traitement cryptographique selon la revendication 8, **caractérisée en ce qu'**elle consiste à transmettre à plusieurs unités de sécurité (PIM) les mêmes informations à traiter, à comparer les informations en retour des unités de sécurité (PIM), et à informer une entité extérieure si les valeurs diffèrent.

10. Méthode de traitement cryptographique selon la revendication 9, **caractérisée en ce qu'**elle consiste à transmettre les mêmes informations à traiter à des unités de sécurité (PIM) connectées sur des modules interfaces (IM) différents.

11. Méthode de traitement cryptographique selon la revendication 8, **caractérisée en ce qu'**elle consiste à effectuer des opérations cryptographiques de test sur une ou des unités de sécurité (PIM) non utilisées et de comparer le résultat avec un résultat de référence.

12. Méthode de traitement cryptographique selon la revendication 8, **caractérisée en ce qu'**elle consiste à effectuer des opérations cryptographiques de test sur au moins trois unités de sécurité (PIM) non utilisées et de comparer les résultats pour déterminer si ces unités (PIM) sont fonctionnelles.

13. Méthode de traitement cryptographique selon les revendications 8 à 12, **caractérisée en ce qu'**elle consiste à gérer les unités de sécurité (PIM) grâce à une liste de ressources située dans le module de contrôle (CM), cette liste comprenant le nombre d'unités disponibles, leur état, leur version et leur capacité cryptographique.

## Patentansprüche

1. Zentralisiertes kryptographisches System hoher Leistung, in einem Verwaltungszentrum befindlich, dafür bestimmt, die an eine Mehrzahl von Benutzermoduln zu übermittelnden Daten zu verarbeiten, einen Steuermodul (CM) sowie zumindest einen kryptographischen Modul (EM) umfassend und **dadurch gekennzeichnet, dass** der Steuermodul Mittel aufweist, um die erforderliche kryptographische Leistung festzustellen und die verfügbaren kryptographischen Resourcen zu kennen, und dadurch, dass jeder kryptographische Modul aus zumindest einem Schnittstellenmodul (IM) besteht, an den parallel eine Mehrheit von monolithischen Sicherheitseinheiten (PIM) angeschlossen ist, wobei diese Sicherheitseinheiten einen Teil des benannten kryptographischen Systems bilden.

2. System nach Anspruch 1, **dadurch gekennzeichnet, dass** die Sicherheitseinheit (PIM) zumindest eine Recheneinheit für die kryptographischen Funktionen, einen Speicher, der die kryptographischen Schlüssel enthält, sowie Mittel der Kommunikation mit dem Schnittstellenmodul umfasst.

3. System nach Ansprüchen 1 oder 2, **dadurch gekennzeichnet, dass** die Sicherheitseinheit (PIM) in abnehmbarer Weise auf den Schnittstellenmodul (IM) montiert ist.

4. System nach Ansprüchen 1 bis 3, **dadurch gekennzeichnet, dass** die Sicherheitseinheit (PIM) in Gestalt einer Chipkarte vorliegt.

5. System nach Anspruch 4, **dadurch gekennzeichnet, dass** diese Chipkarte den Normen der ISO 7816 entspricht.

6. System nach einem der vorangehenden Ansprüche, **dadurch gekennzeichnet, dass** die monolithischen Sicherheitseinheiten (PIM) kryptographische Recheneinheiten unterschiedlichen Typs wie zum Beispiel RSA, DES, T-DES oder IDEA besitzen.

7. System nach einem der vorangehenden Ansprüche, **dadurch gekennzeichnet, dass** der Steuermodul (CM) eine Liste der Resourcen der monolithischen Einheiten umfasst, in der die verfügbare Anzahl, ihr Zustand, ihre Version und ihre kryptographische Kapazität verzeichnet ist.

8. Verfahren der zentralisierten Ver- und Entschlüsselung von zwischen einem Verwaltungszentrum und einer Mehrheit von Benutzermoduln übermittelten Daten, darin bestehend, dass durch das Verwaltungszentrum zu verschlüsselnde oder zu entschlüsselnde Daten an einen Steuermodul (CM) übermittelt werden, der in einem kryptographischen Modul (EM) des benannten Verwaltungszentrums angeordnet ist, wobei dieser Steuermodul Mittel umfasst, um die erforderliche kryptographische Leistung festzustellen und die verfügbaren kryptographischen Resourcen zu kennen, wobei dieser Steuermodul ausserdem zumindest einen Schnittstellenmodul (IM) umfasst und über diesen Schnittstellenmodul (IM) die zu verschlüsselnden oder zu entschlüsselnden Daten an eine Mehrheit von monolithischen Sicherheitseinheiten (PIM) übermittelt, die parallel an diesen Schnittstellenmodul angeschlossen sind, wobei diese Sicherheitseinheiten je nach dem Datenfluss mit kryptographischen Operationen beauftragt werden.

9. Verfahren der kryptographischen Verarbeitung nach Anspruch 8, **dadurch gekennzeichnet, dass** es darin besteht, an mehrere Sicherheitseinheiten (PIM) die gleichen zu verarbeitenden Daten zu übermitteln, die von den Sicherheitseinheiten (PIM) zurückkommenden Daten zu vergleichen und eine ausserhalb befindliche Stelle davon zu benachrichtigen, wenn die Werte sich unterscheiden.

10. Verfahren der kryptographischen Verarbeitung nach Anspruch 9, **dadurch gekennzeichnet, dass** es darin besteht, die gleichen zu verarbeitenden Daten an Sicherheitseinheiten (PIM) zu übermitteln, die an verschiedene Schnittstellenmoduln (IM) angeschlossen sind.

11. Verfahren der kryptographischen Verarbeitung nach Anspruch 8, **dadurch gekennzeichnet, dass** es darin besteht, kryptographische Testoperationen an einem oder mehreren Sicherheitseinheiten (PIM) auszuführen, die sich nicht im Einsatz befinden, und das Ergebnis mit einem Bezugsergebnis zu vergleichen.

12. Verfahren der kryptographischen Verarbeitung nach Anspruch 8, **dadurch gekennzeichnet, dass** es darin besteht, kryptographische Testoperationen an zumindest drei Sicherheitseinheiten (PIM) auszuführen, die sich nicht im Einsatz befinden, und die Ergebnisse zu vergleichen, um festzustellen, ob diese Einheiten (PIM) funktionsfähig sind.

13. Verfahren der kryptographischen Verarbeitung nach Ansprüchen 8 bis 12, **dadurch gekennzeichnet, dass** es darin besteht, die Sicherheitseinheiten (PIM) dank einer Resourcenliste zu verwalten, die sich im Steuermodul (CM) befindet, wobei diese Liste die Anzahl der verfügbaren Einheiten, ihren Zustand, ihre Version und ihre kryptographische Kapazität umfasst.

## Claims

1. A centralised high rate cryptographic system localised in an operating centre and intended to manage data to be transmitted to a plurality of user modules, comprising a control module (CM) and at least one cryptographic module (EM), **characterised in that** the control module comprises means for determining the required cryptographic rate and for knowing the available cryptographic resources, and **in that** each cryptographic module comprises at least one interface modules (IM) on which are connected in parallel a plurality of monolithic security units (PIM), these units being part of said cryptographic system.

2. A system according to Claim 1, **characterised in that** the security unit (PIM) comprises at least one calculation unit for the cryptographic functions, a memory containing the cryptographic keys, and communication means to the interface module.

3. A system according to Claims 1 or 2, **characterised in that** the security unit (PIM) is set in an removable way on the interface module (IM).

4. A system according to Claims 1 to 3, **characterised in that** the security unit (PIM) is in the form of a smart card.

5. A system according to Claim 4, **characterised in that** said smart card follows the norms ISO 7816.

6. A system according to any of the preceding Claims, **characterised in that** the monolithic security units (PIM) have cryptographic calculation units of a different type, such as RSA, DES, T-DES, or IDEA.

7. A system according to any of the preceding Claims, **characterised in that** the control module (CM) has a resource list of the monolithic units comprising the available number, their state, their version and their cryptographic capacity.

8. A centralised method of encryption/decryption of data transmitted between an operating centre and a plurality of user modules, consisting in transmitting, by the operating centre, data to be encrypted or decrypted to a control module (CM) placed in a cryptographic module (EM) of said operating center, said control module comprising means for determining the required cryptographic rate and for knowing the available cryptographic resources, this control module further comprising at least one interface module (IM) and transmitting by means of said interface modules (IM), the data to be encrypted or decrypted to a plurality of monolithic security units (PIM) connected in parallel on said interface module, these security units being in charge of the cryptographic operations depending on the rate of the data.

9. A cryptographic processing method according to Claim 8, **characterised in that** it consists in transmitting to several security units (PIM) the same data to be processed, in comparing the data when returning from the security units (PIM), and informing an external entity if their values differ.

10. A cryptographic processing method according to Claim 9, **characterised in that** it consists in transmitting the data to be processed to security units (PIM) connected on different interface modules (IM).

11. A cryptographic processing method according to Claim 8, **characterised in that** it consists in carrying out test operations on one or several security units that are not currently in use and comparing the result with a reference result.

12. A cryptographic processing method according to Claim 8, **characterised in that** it consists in carrying out cryptographic test operations on at least three security units (PIM) that are not currently in use and comparing the results in order to determine if these units (PIM) are operative.

13. A cryptographic processing method according to Claims 8 to 12, **characterised in that** it consists in administrating the security units (PIM) by means of a resource list situated in the control module (CM), this list comprising the number of available units, their state, their version, and their cryptographic capacity.
